# EUROPEAN PATENT APPLICATION

(11) **EP 4 643 723 A1**
(43) Date of publication of application: **05.11.2025**
(21) Application number: 25171922.5
(22) Date of filing: 23.04.2025
(51) Int. Cl.: A47J 31/40, A47J 31/44, A47J 31/60

(54) **CLEANING GRANULE DISPENSING DEVICE, DISPENSING METHOD AND BEVERAGE MACHINE**

(30) Priority: 29.04.2024 CN 202410526049
(71) Applicant: Kalerm Technology (Suzhou) Co., Ltd, Suzhou Jiangsu 215134 (CN)
(72) Inventor: WANG, Fuming, Suzhou, Jiangsu, 215134 (CN); LU, Dean, Suzhou, Jiangsu, 215134 (CN)
(74) Representative: Winter, Brandl - Partnerschaft mbB

(57) **Abstract**

The present application provides a cleaning granule dispensing device, a beverage machine, and a dispensing method. The cleaning granule dispensing device includes: a base; a storage container disposed above the base, the storage container having an accommodation cavity for accommodating cleaning granules; a driving mechanism including a motor and a delivery disc driven to rotate by the motor, the delivery disc being disposed on the base; wherein the storage container includes a bottom plate portion, the bottom plate portion is provided with a discharge port communicating with the accommodation cavity, the discharge port is offset relative to a rotation axis of the delivery disc; the base is provided with a delivery outlet; the delivery disc is provided with at least one delivery cavity, driven by the motor, the delivery disc drives the delivery cavity to sequentially communicate with the discharge port and the delivery outlet.

## Description

### TECHNICAL FIELD

The present application relates to the field of beverage machines, and particularly relates to a cleaning granule dispensing device for automatically dispensing cleaning granules to a beverage machine, a dispensing method and a beverage machine.

### BACKGROUND

In existing beverage machines, brewing materials and a certain amount of hot water need to be infused into a brewing chamber for beverage preparation. Taking automatic coffee machines as an example, coffee granules can be delivered into the brewing chamber, and after brewing, coffee liquid can be discharged from the brewing chamber. This requires periodic cleaning of the brewing chamber to remove oil and granules left during the brewing process. To clean the brewing chamber, cleaning materials need to be added into the brewing chamber for cleaning, and the cleaning materials can be liquid cleaning agents or solid cleaning granules.

When cleaning an automatic coffee machine, if liquid cleaning agents are used to clean the brewing chamber, the amount of cleaning agent needs to be strictly controlled to avoid cleaning agent residue. This requires setting up a complex system to control and detect the amount of cleaning agent, and users can easily cause agents spillage or overflow when adding liquid cleaning agents.

Of course, solid cleaning granules can also be used. When the brewing chamber needs cleaning, users can manually add an appropriate amount of cleaning granules into the brewing chamber. For example, a channel with an external opening can be provided, where the channel can guide cleaning granules into the brewing chamber, and users only need to put cleaning granules through the external opening. However, each cleaning operation requires manual operation by users, which is time-consuming and labor-intensive, causing great inconvenience to users.

### SUMMARY

One object of the present invention is to provide a user-friendly cleaning granule dispensing device.

Another object of the present invention is to provide a dispensing method capable of achieving automatic dispensing of cleaning granules.

Yet another object of the present invention is to provide a user-friendly beverage machine.

To achieve one of the above objects, the present application provides a cleaning granule dispensing device, including:
a base;
a storage container disposed above the base, the storage container having an accommodation cavity for accommodating cleaning granules;
a driving mechanism includes a motor and a delivery disc driven to rotate by the motor, the delivery disc being disposed on the base;
wherein the storage container comprises a bottom plate portion, the bottom plate portion is provided with a discharge port communicating with the accommodation cavity, the discharge port is offset relative to a rotation axis of the delivery disc; the base is provided with a delivery outlet; the delivery disc is provided with at least one delivery cavity, driven by the motor, the delivery disc drives the delivery cavity to sequentially communicate with the discharge port and the delivery outlet.

Compared with the prior art, the beneficial effects of the present invention are: through driving the delivery disc, when the delivery cavity communicates with the discharge port, the delivery disc automatically receives cleaning granules, when the delivery cavity communicates with the delivery outlet, the delivery disc automatically outputs cleaning granules, achieving quantitative automated dispensing of cleaning granules, facilitating cleaner measurement to control cleaning capability, obtaining optimal cleaning effects, enabling the beverage machine to execute cleaning processes completely automatically, thereby facilitating user operation.

The present application further provides a beverage machine, including a main body, wherein a target cleaning chamber is provided inside the main body, the main body is provided with the above-mentioned cleaning granule dispensing device, the cleaning granule dispensing device is configured to dispense cleaning granules to the target cleaning chamber.

The present application further provides a dispensing method, applied to the above-mentioned cleaning granule dispensing device, comprising the following steps:
receiving a cleaning instruction;
controlling the motor to rotate in a preset direction, the motor drives the delivery cavity on the delivery disc to sequentially pass through a receiving position, a detection position and an output position;
the receiving position indicates that the delivery cavity can receive cleaning granules; the output position indicates that the delivery cavity can dispense the cleaning granules;
at the detection position, detecting whether cleaning granules exist in the delivery cavity;
when the cleaning granules are detected, after the delivery cavity reaches the output position, controlling the motor to drive the delivery cavity back to a waiting position.

### BRIEF DESCRIPTION OF THE DRAWINGS

Fig. 1 is a schematic view of a cleaning granule dispensing device according to an embodiment of the present application.
Fig. 2 is a sectional view along line A-A in Fig. 1 of the cleaning granule dispensing device.
Fig. 3 is a sectional view along line B-B in Fig. 2 of the cleaning granule dispensing device.
Fig. 4 is a sectional view along line C-C in Fig. 2 of the cleaning granule dispensing device.
Fig. 5 is an enlarged view of the stirring rod of the cleaning granule dispensing device shown in Fig. 4.
Fig. 6 is a perspective view of the support member of the cleaning granule dispensing device shown in Fig. 4.
Fig. 7 is a sectional view along line D-D in Fig. 4 of the cleaning granule dispensing device.
Fig. 8 is an exploded perspective view of the cleaning granule dispensing device shown in Fig. 7.
Fig. 9 is a sectional view along line E-E in Fig. 7 of the cleaning granule dispensing device, wherein the support member is in an initial state.
Fig. 10 is similar to Fig. 9, wherein the support member is driven by the drive shaft to move in a first direction.
Fig. 11 is a schematic view of another structure of the granule feeding device in Fig. 1.
Fig. 12 is a schematic view of a portion of the structure of the granule feeding device in Fig. 11.
Fig. 13 is a schematic view of the fixing base of the granule feeding device in Fig. 11.
Fig. 14 is a sectional view along line F-F of the granule feeding device in Fig. 11.
Fig. 15 is similar to Fig. 2, showing a cleaning granule delivery process, wherein the delivery cavity is at a waiting position.
Fig. 16 is similar to Fig. 2, showing a cleaning granule delivery process, wherein the delivery cavity is at a receiving position.
Fig. 17 is similar to Fig. 2, showing a cleaning granule delivery process, wherein the delivery cavity is at an output position.
Fig. 18 is similar to Fig. 2, wherein the delivery cavity is at a detection position.
Fig. 19 is a schematic view of a beverage machine according to an embodiment of the present application.
Fig. 20 is a flow chart of a dispensing method according to an embodiment of the present application.

The repeated use of reference numerals in this specification and drawings is intended to represent the same or similar features or elements of the present application.

### DETAILED DESCRIPTION

The following detailed description of the present application will be made with reference to the specific embodiments shown in the drawings. However, these embodiments do not limit the present application, and any structural, methodological, or functional variations made by those skilled in the art based on these embodiments are included within the scope of protection of the present application.

It should be understood that spatial relative position terms such as "upper", "above", "lower", "below" used in this document are for the purpose of convenience to describe the relationship between one unit or feature relative to another unit or feature as shown in the drawings. The spatial relative position terms are intended to encompass different orientations of the device in use or operation in addition to the orientation shown in the figures.

The cleaning granule dispensing device in specific embodiments of the present application is explained taking a cleaning granule dispensing device 100 for a coffee machine as an example. A coffee machine generally includes a brewing unit, where beverage granules and water at a predetermined temperature are infused into the brewing unit for beverage preparation. The coffee machine may also include a milk frother for producing hot milk or milk froth to make beverages with different flavors. Both the brewing unit and milk frother need periodic cleaning to ensure safer and more hygienic use of the coffee machine. Cleaning granules for assisting cleaning can be added to the brewing unit or milk frother, or can be mixed with water through a cleaning channel before being infused into the brewing unit or milk frother. The brewing unit and milk frother form the target cleaning chamber of the coffee machine, and of course there may be other cavities requiring cleaning, all of which can be considered as target cleaning chambers.

The cleaning granule dispensing device 100 can be connected to a beverage machine, particularly an automatic or semi-automatic beverage machine such as a coffee machine or tea machine, through connecting devices or supporting members. In the shown embodiment, the cleaning granule dispensing device 100 can be permanently integrated into the beverage machine; however, it can also be detachably installed on the beverage machine through screws or brackets of the cleaning granule dispensing device itself.

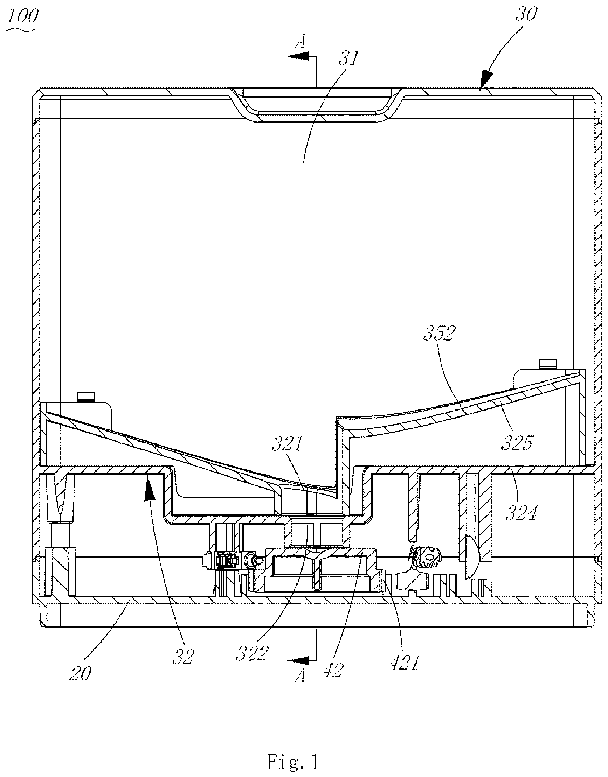

Referring to Figs. 1 to 3, in the present embodiment, the cleaning granule dispensing device 100 includes a base 20, a storage container 30, and a driving mechanism. The storage container 30 is disposed above the base 20. The storage container 30 has an accommodation cavity 31 for accommodating cleaning granules, and the base 20 is configured to support the storage container 30 and mount the driving mechanism. The driving mechanism includes a motor 41 and a delivery disc 42 driven to rotate by the motor 41, with the motor 41 and delivery disc 42 disposed on the base 20. The base 20 can be a separate structure or can be a frame structure of the beverage machine itself.

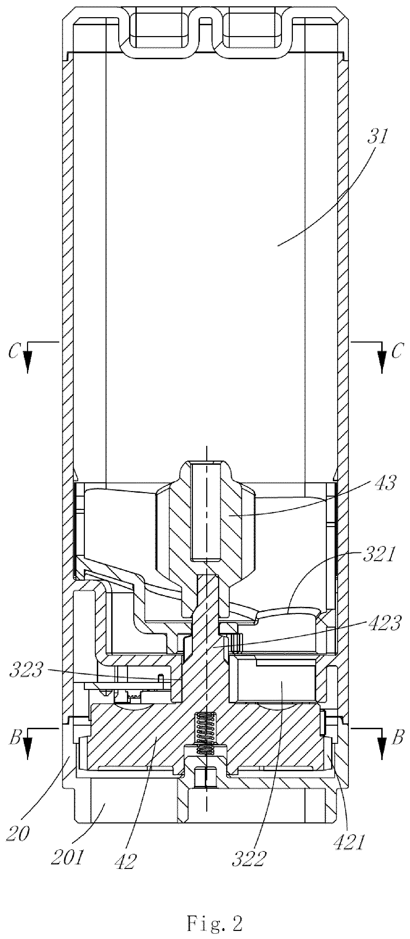

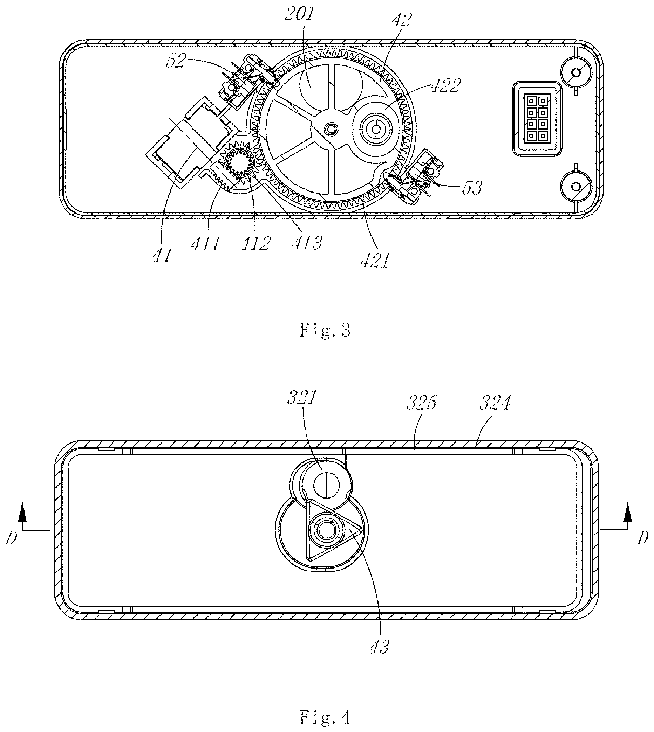

The storage container 30 includes a bottom plate portion 32, the driving mechanism is disposed below the bottom plate portion 32, the bottom plate portion 32 is provided with a discharge port 321 communicating with the accommodation cavity 31, the discharge port 321 is offset relative to the rotation axis of the delivery disc 42. The delivery disc 42 is provided with at least one delivery cavity 422, the delivery disc 42 can drive the delivery cavity 422 to align with the discharge port 321 to communicate the delivery cavity 422 with the accommodation cavity 31. As shown in Figs. 2 and 3, the base 20 is provided with a delivery outlet 201. Driven by the motor 41, the delivery disc 42 drives the delivery cavity 422 to sequentially communicate with the discharge port 321 and the delivery outlet 201.

The above cleaning granule dispensing device 100, through driving the delivery disc 42, when the delivery cavity 422 communicates with the discharge port 321, the delivery disc 42 automatically receives cleaning granules, when the delivery cavity 422 communicates with the delivery outlet 201, the delivery disc 42 automatically outputs cleaning granules, which can achieve automatic metered dispensing of cleaning granules, facilitating measurement of cleaning granules to control cleaning capability, obtaining optimal cleaning effect, enabling the beverage machine to execute cleaning process completely automatically, thus providing convenience for users.

In this embodiment, one delivery cavity 422 is provided. In other optional embodiments, the number of delivery cavities 422 can also be two, three or more, multiple delivery cavities 422 are spaced circumferentially around the delivery disc 42. For one full rotation of the delivery disc 42, each delivery cavity 422 can sequentially communicate with the discharge port 321 and the delivery outlet 201, thereby increasing the number of cleaning granules dispensed per unit time while maintaining the same rotation speed of the delivery disc 42.

In a specific embodiment, three delivery cavities 422 are provided, each delivery cavity 422 can only accommodate one cleaning granule. Each of the three delivery cavities 422 can communicate with the discharge port 321 to receive cleaning granules and then communicate with the delivery outlet 201 to output cleaning granules driven by the delivery disc 42. One full rotation of the delivery disc 42 can dispense three cleaning granules.

Optionally, the axis of the motor 41 is perpendicular to the rotation axis of the delivery disc 42, the peripheral surface of the delivery disc 42 is provided with drive teeth 421, the motor 41 drives the delivery disc 42 to rotate via the drive teeth 421. The motor 41 is horizontally positioned relative to the delivery disc 42, which can reduce the height of the cleaning granule dispensing device along the axial direction of the delivery disc 42, better utilizing space on the base 20 to make the cleaning granule dispensing device more compact.

A multi-stage gear train can be provided between the motor 41 and the delivery disc 42 to transmit power from the motor 41 to the delivery disc 42. Specifically, the output shaft of the motor 41 is connected to a worm 411. A worm wheel 412 and a gear 413 are connected between the delivery disc 42 and the worm 411. The worm 411 meshes with the worm wheel 412, the worm wheel 412 is coaxially fixed with the gear 413, the gear 413 meshes with the drive teeth 421 on the delivery disc 42, that is, the motor 41 drives the delivery disc 42 through two-stage transmission.

The worm gear transmission has a large transmission ratio, and the worm gear structure can achieve change in transmission direction. Drive teeth 421 are directly provided on the peripheral surface of the delivery disc 42 to achieve speed reduction transmission from the motor 41 to the delivery disc 42, making the entire transmission mechanism more compact while ensuring reliable transmission.

Other transmissions can also be used between the motor 41 and the delivery disc 42, such as one or more of bevel gear transmission, chain transmission, and belt transmission.

In some specific embodiments, the worm wheel 412 and the gear 413 are integrally formed, which simplifies the structure while improving strength and stability of transmission .

A storage channel 322 extending toward the delivery disc 42 is provided at the discharge port 321, one end of the storage channel 322 communicates with the accommodation cavity 31, and the other end can intermittently communicate with the delivery cavity 422.

In one embodiment, the storage channel 322 has a storage space that can be configured to accommodate at least one cleaning granule.

Optionally, the size of the storage space is configured to accommodate only one cleaning granule, which can pre-store another cleaning granule in the storage space while the delivery disc 42 is delivering one cleaning granule, ensuring reliable delivery next time.

For example, the delivery cavity 422 can also be configured to accommodate only one cleaning granule to ensure metered output of cleaning granules.

Of course, the storage space can also be configured to accommodate multiple cleaning granules, along the direction in which cleaning granules enter the storage channel 322, multiple cleaning granules are stacked sequentially in the storage space, which can prevent multiple cleaning granules from jamming in the storage space and facilitate smooth and error-free transfer of cleaning granules from the storage channel 322 into the delivery cavity 422.

Multiple cleaning granules are sequentially stacked in the storage space along the extending direction of the storage space. In this embodiment, it can be understood that multiple cleaning granules are stacked vertically in the storage space. Of course, the storage space can also extend at an angle relative to the height direction of the beverage machine, with the stacking direction of multiple cleaning granules in the storage space consistent with the extending direction of the storage space.

Furthermore, a stirring rod 43 is provided in the accommodation cavity 31, the stirring rod 43 is connected to the delivery disc 42, and the delivery disc 42 can drive the stirring rod 43 to rotate synchronously. Thus, while delivering cleaning granules, the delivery disc 42 can drive the stirring rod 43 to stir the cleaning granules stored in the accommodation cavity 31, thereby preventing multiple cleaning granules from being stuck in dead corners or from being unable to enter the discharge port 321 due to adhesion. The stirring rod 43 is directly driven to rotate by the delivery disc 42, without requiring additional power drive for the stirring rod 43, which can improve the functional integration of the delivery disc 42 without increasing the cost of the cleaning granule dispensing device.

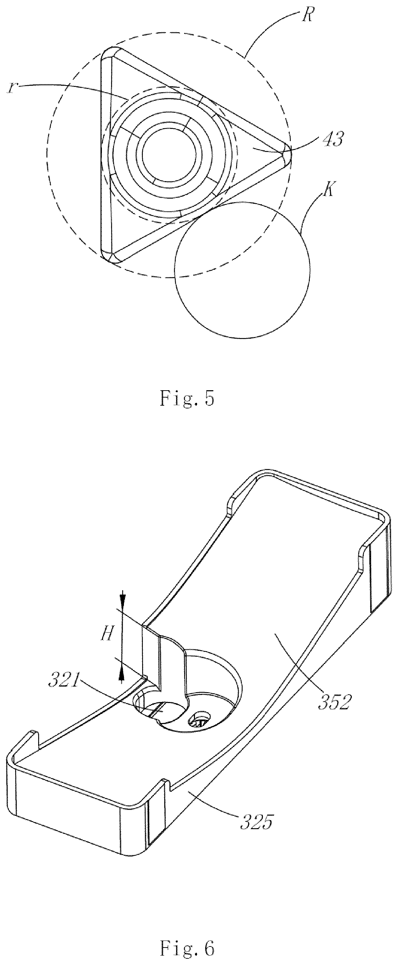

The stirring rod 43 can be any shape that facilitates stirring cleaning granules. Referring to Figs. 4 and 5, in this embodiment, the cleaning granules are spherical, the stirring rod 43 is coaxially disposed with the delivery disc 42, an outer contour of a cross section of the stirring rod 43 is constructed as a polygon, and the difference between radii of the circumscribed circle and the inscribed circle of the polygon is less than the radius of the cleaning granules. By setting the dimensions of the stirring rod 43, smooth stirring of cleaning granules can be achieved while reducing the probability of the stirring rod 43 being jammed by cleaning granules during rotation.

In this embodiment, the outer contour of the cross section of the stirring rod 43 is constructed as a triangle, where the difference between the radii of the circumscribed circle R and the inscribed circle r of the triangle is less than the radius of the cleaning granule K. The triangular cross-section of the stirring rod 43 makes it easier to stir cleaning granules and better prevents the stirring rod 43 from being jammed by cleaning granules.

In one embodiment, a drive shaft 423 is fixed on the delivery disc 42, a positioning hole 323 is provided on the bottom plate portion 32, an end of the drive shaft 423 away from the delivery cavity 422 extends through the positioning hole 323 into the accommodation cavity 31 and connects with the stirring rod 43. The delivery disc 42 can be positioned relative to the bottom plate portion 32 through the drive shaft 423, and it also facilitates the connection between the drive shaft 423 and the stirring rod 43 in the accommodation cavity 31, ensuring more reliable delivery of cleaning granules. The drive shaft 423 can not only position the delivery disc 42 but also provide transmission connection to the stirring rod 43, making the cleaning granule dispensing device more compact while achieving its functions.

Of course, the drive shaft 423 can be integrally formed with the delivery disc 42 or separately mounted on the delivery disc 42. Preferably, in this embodiment, the drive shaft 423 is integrally formed with the delivery disc 42, which can reduce the assembly complexity of the cleaning granule dispensing device while improving transmission reliability.

To ensure reliable delivery of cleaning granules to the discharge port 321, the bottom plate portion 32 may include a supporting surface 352 for supporting cleaning granules, where the supporting surface 352 is configured as a spiral surface with the spiral center line of the spiral surface coinciding with the center line of the discharge port 321. Along the height direction of the beverage machine, portions of the supporting surface 352 farther from the discharge port 321 are higher than portions closer to the discharge port 321, thus enabling the spiral surface to guide the movement of cleaning granules.

Due to gravity, under the guidance of the spiral surface, cleaning granules can roll or slide to the discharge port 321 in an orderly sequence. Compared to a supporting surface 352 configured as a flat bottom surface, the spiral surface construction can reliably deliver cleaning granules even when few granules remain.

In one embodiment, the bottom plate portion 32 includes a bottom plate 324 of the storage container 30 and a support member 325 disposed above the bottom plate 324, the supporting surface 352 is provided on the support member 325, and along the radial direction of the spiral center line, the supporting surface 352 is inclined downward toward the center of the discharge port 321.

The separate construction of the support member 325 and bottom plate 324 allows independent manufacture of the support member 325, making it easier to ensure the shape and dimensions of the support member 325 while simplifying the structure and manufacture of the storage container 30, thereby reducing costs. The support member 325 can be a plate structure or a plate structure with surrounding barriers. Additionally, the inclination of the supporting surface 352 can form an inclined spiral surface, more reliably guiding cleaning granules toward the discharge port 321.

In this embodiment, the storage container 30 is constructed as a cuboid, with the center of the delivery disc 42 concentrically aligned with the center of the cuboid. Along the width direction of the cuboid, the discharge port 321 is offset from the center of the delivery disc 42.

Referring to Fig. 6, along the axial direction of the spiral center line, the height difference H between the highest point and lowest point of the spiral surface is less than or equal to one pitch. This dimensional setting of the spiral surface can more rationally utilize space within the storage container 30, ensuring reliable output of cleaning granules regardless of the quantity stored.

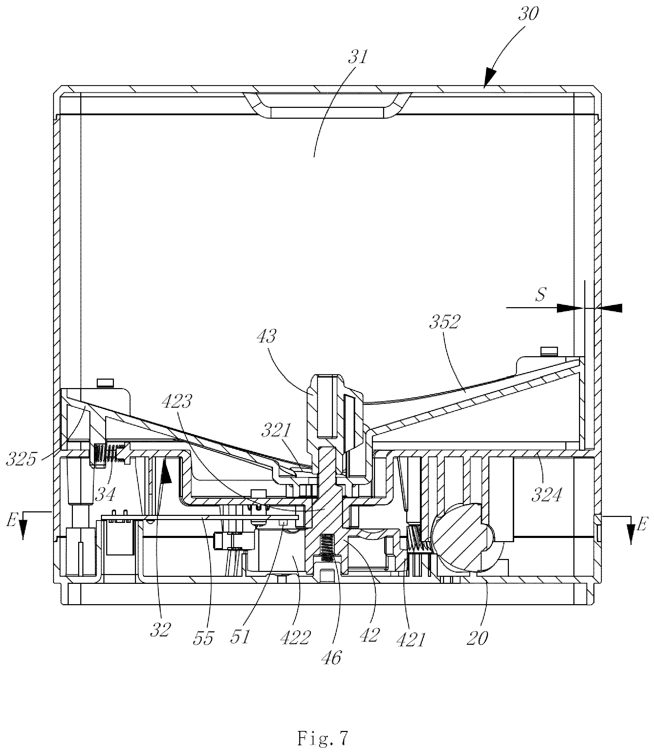

Referring to Fig. 7, a first elastic member 46 is provided between the delivery disc 42 and the base 20. The first elastic member 46 can be a compression spring with both ends abutting against the delivery disc 42 and the base 20 respectively, providing an elastic force to the delivery disc 42 in a direction away from the base 20 along the rotation axis, thereby increasing rotational damping of the delivery disc 42 and reducing rotational noise, thus improving user experience.

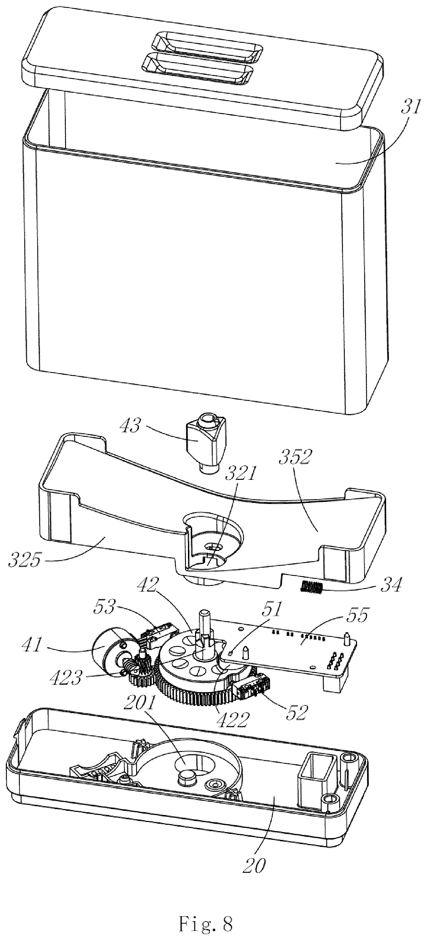

Referring to Figs. 8 to 10, the delivery disc 42 is connected to the bottom plate portion 32 in a drivable manner, rotation of the delivery disc 42 is transmitted to the bottom plate portion 32 via the driving connection, causing the bottom plate portion 32 to move within a preset range along the radial direction of the delivery disc 42.

The movement of the bottom plate portion 32 can drive the cleaning granules in the accommodation cavity 31, preventing granules from getting stuck while moving toward the discharge port 321, and the movement within the preset range can also prevent granules from adhering together.

Various methods can be used for the driving connection between the delivery disc 42 and the bottom plate portion 32, such as reciprocating drive connection based on cam principle, crank-rod principle, etc.

A reset element 34 is connected to the bottom plate portion 32. The delivery disc 42 drives the bottom plate portion 32 to move in a first direction, while the reset element 34 provides a reset force to the bottom plate portion 32 in the direction opposite to the first direction.

Specifically, the bottom plate portion 32 can move to a first limit position in the first direction driven by the delivery disc 42. Under the reset force of the reset element 34, the bottom plate portion 32 can perform a reset movement in the direction opposite to the first direction, moving from the first limit position to a second limit position. The first and second limit positions are the two extreme positions of the bottom plate portion 32 along the first direction.

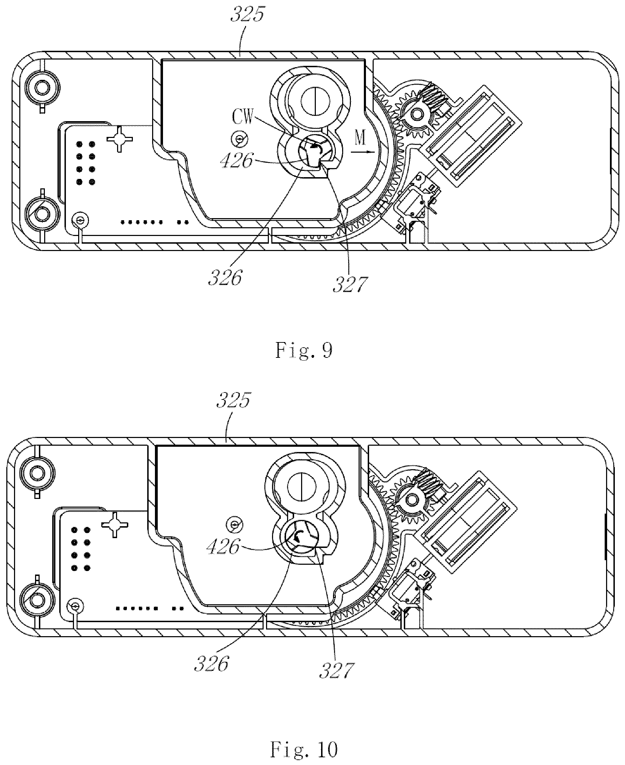

Referring to Fig. 9, the arrow M indicates the first direction in this embodiment. The reset element 34 allows the delivery disc 42 to only drive the bottom plate portion 32 in one direction, while movement in the opposite direction is driven by the reset element 34. The reset movement driven by the reset element 34 can generate greater vibrational potential energy, providing better effects in preventing granule jamming and adhesion.

The reset element 34 is constructed as a compression spring, but can also be other elements capable of generating reset force, such as repelling magnets.

Preferably in this embodiment, as mentioned earlier, the support member 325 can be separately constructed from the bottom plate 324, meaning the support member 325 can be set as a separate component independent from the storage container 30. The drive shaft 423 extends through the bottom plate 324 and is connected to the support member 325 in a drivable manner. A preset gap S exists between the support member 325 and the side wall of the storage container 30, allowing the support member 325 to move relative to the bottom plate 324 along the radial direction of the delivery disc 42 within the preset gap S.

The movement of the support member 325 can be concealed inside the storage container 30, and the drive shaft 423 only drives the support member 325, reducing the transmission load. The reset element 34 can be provided between the bottom plate 324 and the support member 325. The delivery disc 42 drives the support member 325 to move in the first direction, while the reset element 34 provides a reset force to the support member 325 in the direction opposite to the first direction. The first direction can be along the length direction of the storage container 30, and the preset gap S can be set larger, thereby increasing the amplitude of the reciprocating movement of the support member 325, further preventing granule jamming or adhesion.

Referring to Figs. 9 and 10, specifically, a mating groove 326 is provided on the support member 325, and drive teeth 426 are provided on the drive shaft 423. The drive shaft 423 and the mating groove 326 have a clearance fit along the radial direction of the drive shaft 423. A blocking portion 327 is formed in the mating groove 326, interfering with the drive teeth 426 along the first direction. Driven by the drive shaft 423, the drive teeth 426 move counterclockwise toward the blocking portion 327. After the drive teeth 426 contact the blocking portion 327, the drive teeth 426 can drive the blocking portion 327 to move, causing the support member 325 to move in the first direction. After the drive teeth 426 move counterclockwise past the blocking portion 327, i.e., after the drive teeth 426 disengage from the blocking portion 327, the support member 325 can perform a reset movement in the direction opposite to the first direction driven by the reset element 34. Referring to Fig. 9, the arrow CW indicates the counterclockwise direction in this embodiment.

The configuration of the mating groove 326 and drive teeth 426 can simplify the driving connection between the drive shaft 423 and support member 325, making the cleaning granule dispensing device structure compact and cost-effective. Referring to Fig. 9, as the drive shaft 423 rotates in the arrow direction, the drive teeth 426 abut against the blocking portion 327. With a preset gap between the support member 325 and bottom plate 324 in the first direction, the drive teeth 426 drive the support member 325 to move in the first direction until, as shown in Fig. 10, the drive teeth 426 pass over the blocking portion 327 in the arrow direction, allowing the support member 325 to reset in the opposite direction under the action of the reset element 34.

The drive teeth 426 can be arranged either as a single tooth or as multiple teeth spaced circumferentially around the drive shaft 423. In this embodiment, three drive teeth 426 are spaced circumferentially around the drive shaft 423, enabling the drive shaft 423 to push the support member 325 three times in one full rotation, thus increasing the frequency of reciprocating vibration of the support member 325 and further preventing granule jamming or adhesion.

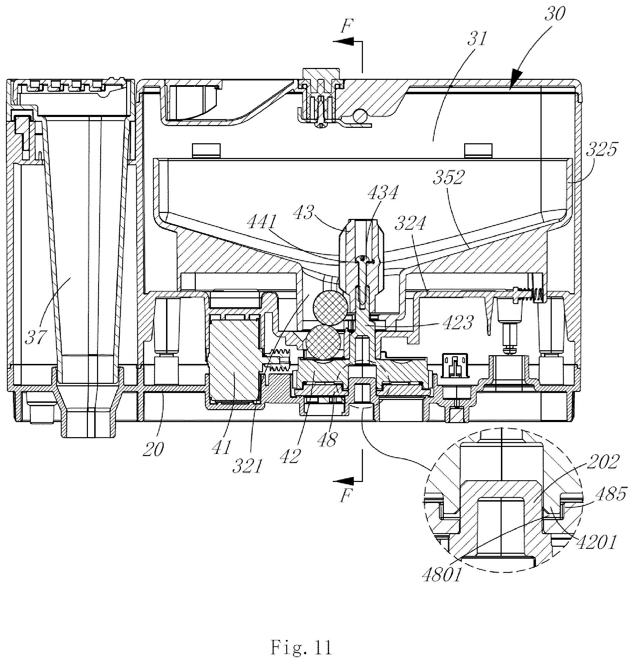

Referring to Figs. 11 to 12, in one embodiment, a stirring arm 44 is connected to the stirring rod 43, the stirring arm 44 extends at an angle relative to the longitudinal direction of the stirring rod 43. By providing a stirring arm 44 extending in a different direction from the stirring rod 43, the stirring rod 43 can drive the stirring arm 44 to rotate synchronously, enabling stirring of cleaning granules over a larger range, further reducing the likelihood of cleaning granules being stuck in dead corners or being unable to enter the discharge port 321 due to adhesion.

Optionally, the stirring arm 44 includes a fixed end 441 and a suspended end 442 disposed opposite to each other, the fixed end 441 is fixedly connected to the stirring rod 43, and the suspended end 442 is constructed as a free end. The stirring arm 44 is configured to rotate with the stirring rod 43, the suspended end 442 is capable of deforming relative to the fixed end 441 when subjected to force. The deformation of the suspended end 442 under force allows the stirring arm 44 to yield when touching the bottom plate portion 32 or when touching cleaning granules that are stuck due to adhesion, enabling smooth rotation of the stirring rod 43, thereby avoiding damage to the motor 41 due to excessive load on the stirring rod 43.

For example, the stirring arm 44 is constructed as an elastic member, such as tension spring, compression spring or other spiral springs. During rotation with the stirring rod 43, even if the stirring arm 44 interferes with the bottom plate portion 32, the stirring arm 44 can pass over the interfering portion through its own deformation.

To facilitate installation of the stirring arm 44, holes are provided on the top and side of the stirring rod 43 respectively, the fixed end 441 of the stirring arm 44 passes through the side hole, and a fixing screw 434 can be inserted into the top hole to fix the fixed end 441 to the stirring rod 43. This allows the stirring arm 44 to be installed in a position more advantageous for stirring cleaning granules without affecting the function of the outer contour of the stirring rod 43 in stirring cleaning granules.

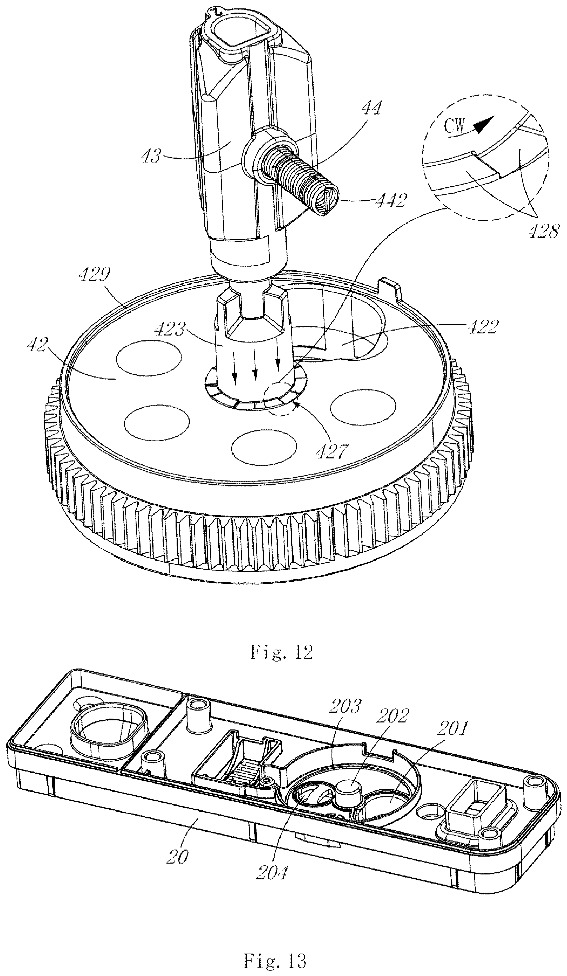

Referring to Fig. 12, in one embodiment, a drive shaft 423 is fixed on the delivery disc 42, extending through the bottom plate portion 32 with a clearance fit, creating a rotational gap between the drive shaft 423 and the bottom plate portion 32. A powder guiding portion 427 protrudes from the end surface of the delivery disc 42 facing the bottom plate portion 32, attached to and surrounding the outer peripheral surface of the drive shaft 423, corresponding to the position of the rotational gap along the axial direction of the drive shaft 423.

The powder guiding portion 427 is positioned adjacent to the drive shaft 423 on the delivery disc 42. Cleaning granule powder falling through the rotational gap between the drive shaft 423 and the bottom plate portion 32 (as shown by arrows in Fig. 9) can be guided out to the upper surface of the delivery disc 42 through the powder guiding portion 427, preventing accumulation of powder in the rotational gap that could cause blockage or jamming of the delivery disc 42.

Optionally, the powder guiding portion 427 includes one or more powder guiding inclined surfaces 428, with the protruding height of each powder guiding inclined surface 428 increasing along the rotation direction (as indicated by the direction of the arrow CW in Fig. 12) of the drive shaft 423. When multiple powder guiding inclined surfaces 428 are provided, they are continuously arranged around the outer peripheral surface of the drive shaft 423. The high portions of the powder guiding inclined surfaces 428 can intercept or scrape off cleaning granule powder falling from the rotational gap, which then falls onto the low portions of adjacent powder guiding inclined surfaces 428 and is guided out to the upper surface of the delivery disc 42 as it rotates, achieving removal of powder from the rotational gap.

Optionally, the edge of the delivery disc 42 is provided with a circumferential powder blocking rib 429 protruding toward the bottom plate portion 32 and surrounding the delivery cavity 422. The powder blocking rib 429 can block cleaning granule powder that falls onto the upper surface of the delivery disc 42, preventing it from entering the transmission connection parts of the delivery disc 42 and causing wear, thereby extending the service life of the delivery disc 42.

Furthermore, a powder leakage port 204 is provided on the base 20, spaced apart from the delivery outlet 201. During rotation of the delivery disc 42, the delivery cavity 422 can communicate with the powder leakage port 204. The powder leakage port 204 facilitates cleaning of fallen cleaning granule powder. For example, a removable cover can be provided below the powder leakage port 204, which can be removed for cleaning the powder.

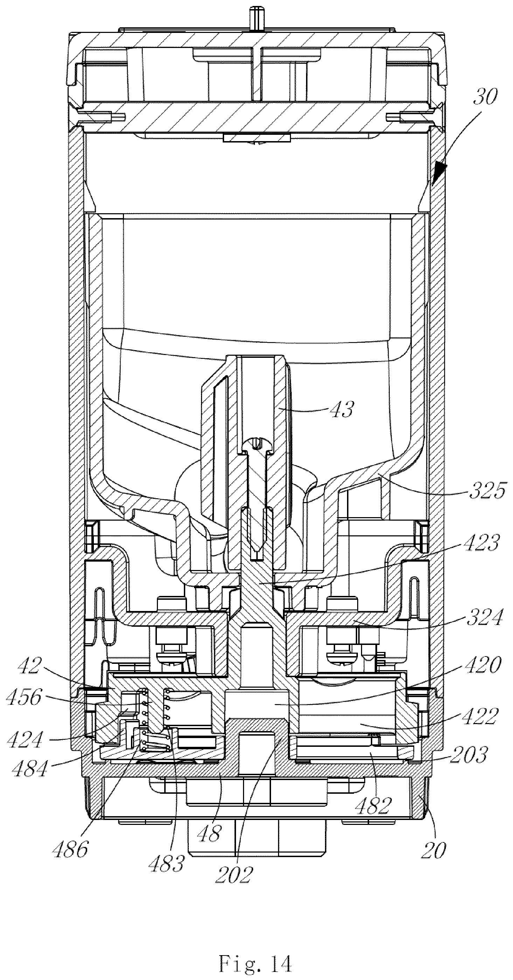

Referring to Figs. 13 and 14, in one embodiment, the cleaning granule dispensing device 100 also includes a sealing cover 48 circumferentially fixed relative to the delivery disc 42, positioned between the delivery disc 42 and base 20. The sealing cover 48 has a through hole 482 communicating with the delivery cavity 422, through which the delivery cavity 422 communicates with the delivery outlet 201.

The sealing cover 48 prevents steam (such as steam from the target cleaning chamber) downstream of the cleaning granule dispensing device from ascending through the delivery outlet 201 into the storage container 30.

Optionally, the fixing base 20 is provided with a positioning post 202, the transfer disc 42 is provided with a positioning hole 420 extending along the direction of the rotation axis of the delivery disc 42. The positioning post 202 passes through the sealing cover 48 and extends into the positioning hole 420. An insertion foot 4201 is provided at the edge of the positioning hole 420. The sealing cover 48 also provides a blocking edge 485 disposed at the periphery of the positioning post 202, a slot 4801 is formed between the blocking edge 485 and the positioning post 202, and the insertion foot 4201 is inserted into the slot 4801 to restrict rotation of the sealing cover 48 relative to the transfer disc 42. The plug-in connection between the sealing cover 48 and positioning hole 420 achieves circumferential fixing between the transfer disc 42 and sealing cover 48, enabling the transfer disc 42 and sealing cover 48 to rotate simultaneously.

Optionally, a recess 424 is provided on the side of the delivery disc 42 facing the base 20, with the sealing cover 48 covering the opening of the recess 424. A second elastic member 483 is provided in the recess 424, providing an elastic force to the sealing cover 48 in a direction away from the delivery disc 42 along the rotation axis of the delivery disc 42.

The second elastic member 483 not only reduces vibration noise during rotation of the delivery disc 42 and sealing cover 48 but also presses the sealing cover 48 against the base 20, enhancing the sealing effect of the sealing cover 48.

Multiple second elastic members 483 can be provided, such as two, three, or more, with multiple second elastic members 483 spaced circumferentially around the rotation axis of the delivery disc 42. The delivery disc 42 is provided with protruding posts 456, and corresponding positioning holes 486 are provided on the sealing cover 48. One end of the second elastic member 483 is sleeved over the protruding post 456, while the other end extends into the positioning hole 486. This facilitates installation and positioning of the second elastic member 483.

Optionally, the sealing cover 48 provides a skirt edge 484 surrounding the rotation axis on the end facing the transfer disc 423, with the skirt edge 484 extending into the recess 424. The skirt edge 484 extending into the recess 424 facilitates installation and positioning between the sealing cover 48 and delivery disc 42, while further preventing steam from downstream of the cleaning granule dispensing device (such as steam from the target cleaning chamber) from entering the recess 424.

Optionally, the base 20 is also provided with a powder leakage port 204 spaced apart from the delivery outlet 201, and an annular protrusion 203 surrounding the rotation axis of the delivery disc 42. Both the delivery outlet 201 and powder leakage port 204 are located inside the annular protrusion 203, with the sealing cover 48 abutting against the annular protrusion 203.

The annular protrusion 203 can reduce wear between the sealing cover 48 and base 20, thereby extending the service life of the cleaning granule dispensing device 100, while further preventing steam (such as steam from the target cleaning chamber) from entering the recess 424.

Additionally, a manual adding channel 37 is provided on one side of the storage container 30, allowing cleaning granules to be manually added to the target cleaning chamber through the manual adding channel 37. The simultaneous provision of a manual adding channel gives users more options.

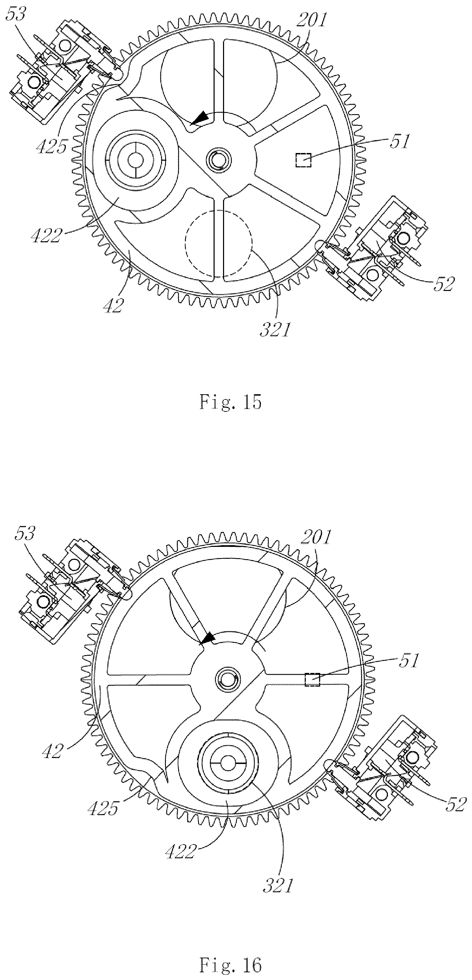

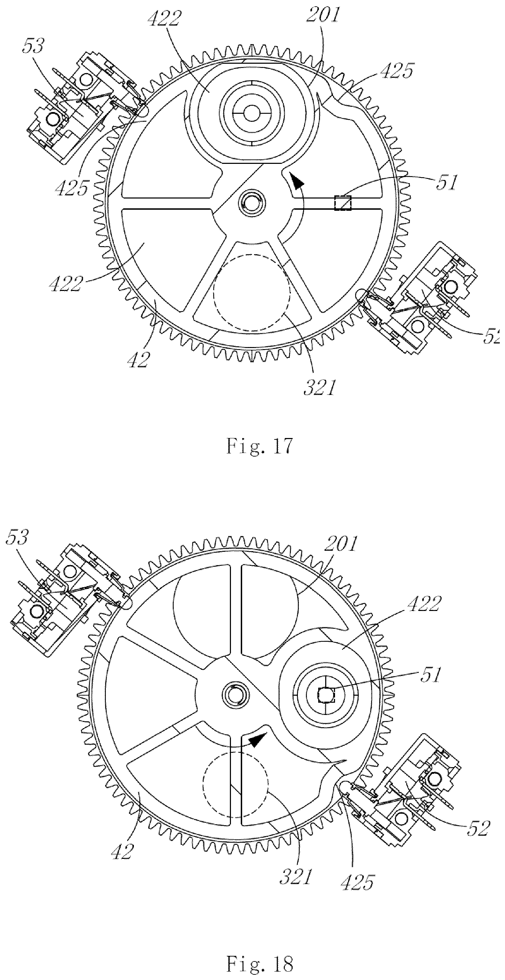

Referring to Figs. 15 to 18, in this embodiment, one delivery cavity 422 is provided, with the delivery disc 42 delivering one cleaning granule per full rotation. Along the movement direction of the delivery cavity 422, the delivery cavity 422 sequentially has a waiting position, a receiving position, and an output position. At the waiting position, the delivery cavity 422 is offset from both the discharge port 321 and delivery outlet 201, as shown in Fig. 15. At the receiving position, the delivery cavity 422 communicates with the discharge port 321, with the delivery disc 42 in granule receiving state, as shown in Fig. 16. At the output position, the delivery cavity 422 communicates with the delivery outlet 201, with the delivery disc 42 in granule dispensing state, as shown in Fig. 17.

When the delivery disc 42 is in standby state, the delivery cavity 422 is offset from both the discharge port 321 and delivery outlet 201, preventing cleaning granules from being contained in the delivery cavity 422 for long periods, thus avoiding situations where granules become stuck due to moisture absorption.

Additionally, when the delivery disc 42 drives the delivery cavity 422 to rotate, it also drives the stirring rod 43 to rotate, further ensuring smooth falling of cleaning granules from the discharge port 321 into the delivery cavity 422.

In other optional embodiments, multiple delivery cavities 422 can be provided, enabling multiple cleaning granules to be delivered in one full rotation of the delivery disc 42. Along the movement direction of the delivery disc 42, each of the multiple delivery cavities 422 sequentially has a waiting position, a receiving position, and an output position. When the delivery disc 42 is in standby state, each delivery cavity 422 is offset from both the discharge port 321 and delivery outlet 201.

Optionally, the delivery cavity 422 also has a detection position, as shown in Fig. 18. Along the movement direction of the delivery cavity 422, the receiving position, the detection position, and the output position are arranged sequentially. Fig. 16 shows the delivery cavity 422 at the receiving position, Fig. 18 shows the delivery cavity 422 at the detection position, and Fig. 17 shows the delivery cavity 422 at the output position.

The cleaning granule dispensing device also includes a first detection element 51 provided on the base 20, configured for detecting cleaning granules in the delivery cavity 422. The first detection element 51 is triggered when the delivery cavity 422 reaches the detection position.

The first detection element 51 can be positioned above the delivery disc 42 for more accurate detection. Triggering the first detection element 51 when the delivery cavity 422 reaches the detection position can improve detection accuracy, extend the service life of the first detection element 51, and save energy.

The first detection element 51 can be any sensor capable of detecting the presence of cleaning granules in the delivery cavity 422, such as ultrasonic sensors, photoelectric sensors, pressure sensors, micro switches, etc.

The base 20 includes a circuit board 55 fixedly connected to the bottom of the storage container 30. Part of the circuit board 55 extends above the delivery disc 42, with the first detection element 51 fixed on the side of the circuit board 55 facing the delivery disc 42. When the delivery cavity 422 rotates to the detection position, the delivery cavity 422 is positioned directly below the first detection element 51, facilitating detection of cleaning granules in the delivery cavity 422.

Furthermore, the cleaning granule dispensing device includes a second detection element 52 provided on the base 20, and a sensing portion 425 corresponding to the delivery cavity 422 is provided on the delivery disc 42. The second detection element 52 is configured to detect the sensing portion 425. When the second detection element 52 detects the sensing portion 425, the cleaning granule dispensing device can determine that the delivery cavity 422 is at the detection position. The detection position can also be determined based on the waiting position or the receiving position, such as through the rotation angle of the delivery disc 42, motor 41 running time, signal disconnection after detecting the sensing portion 425 for a predetermined time, or detection of another sensing portion 425's signal.

When it is determined that the delivery cavity 422 is at the detection position, the first detection element 51 can be triggered. It can be understood that the first detection element 51 does not detect continuously, but rather its detection action is triggered only when the cleaning granule dispensing device confirms the delivery cavity 422 is at the detection position.

Additionally, if multiple delivery cavities 422 are present, correspondingly multiple sensing portions 425 need to be provided, with one-to-one correspondence between delivery cavities 422 and sensing portions 425, meaning the number of sensing portions 425 matches the number of delivery cavities 422, with each sensing portion 425 used to determine the position of its corresponding delivery cavity 422.

In one embodiment, the cleaning granule dispensing device also includes a third detection element 53, also provided on the base 20 and circumferentially spaced from the second detection element 52 along the delivery disc 42. When the second detection element 52 detects the sensing portion 425, the cleaning granule dispensing device can determine that the delivery cavity 422 is at the detection position, and when the third detection element 53 detects the sensing portion 425, the cleaning granule dispensing device can determine that the delivery cavity 422 is at the waiting position. The waiting position can also be determined based on the detection position.

Using two detection elements to separately detect the sensing portion 425 for determining waiting and detection positions ensures reliable detection and simplifies control of the cleaning granule dispensing device.

The second detection element 52 and third detection element 53 are configured as micro switches, and the sensing portion 425 is configured as either a groove or protrusion on the peripheral surface of the delivery disc 42. The detection signal can be either the trigger signal when the micro switch contacts the protrusion or the disconnection signal when the micro switch aligns with the groove.

The combination of micro switches and sensing portion 425 has a simple structure and reduces the cost of the cleaning granule dispensing device. Additionally, placing both micro switches on the base 20 makes the structure more compact. The second detection element 52 and third detection element 53 can also be configured as photoelectric sensors or Hall sensors, with corresponding sensing portions configured to be detectable by these sensors.

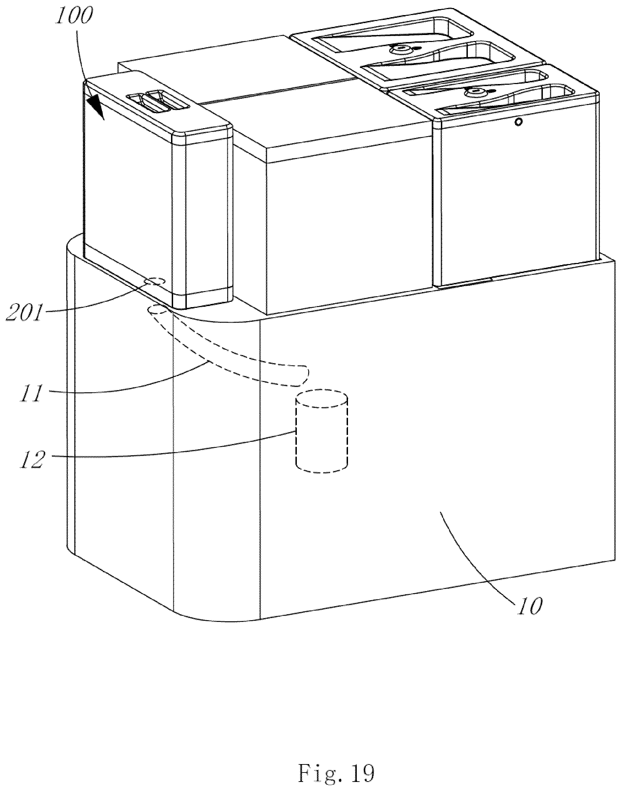

Referring to Fig. 19, the present application also provides a beverage machine comprising a main body 10 with a target cleaning chamber 12 inside. The aforementioned cleaning granule dispensing device is mounted on top of the main body 10 for convenient user addition of cleaning granules. A delivery channel 11 is provided on the main body 10, connecting the delivery outlet 201 with the target cleaning chamber 12.

The cleaning granule dispensing device provided on the beverage machine enables completely automatic execution of cleaning processes through automatic metered dispensing of cleaning granules, achieving optimal cleaning effect and providing user convenience.

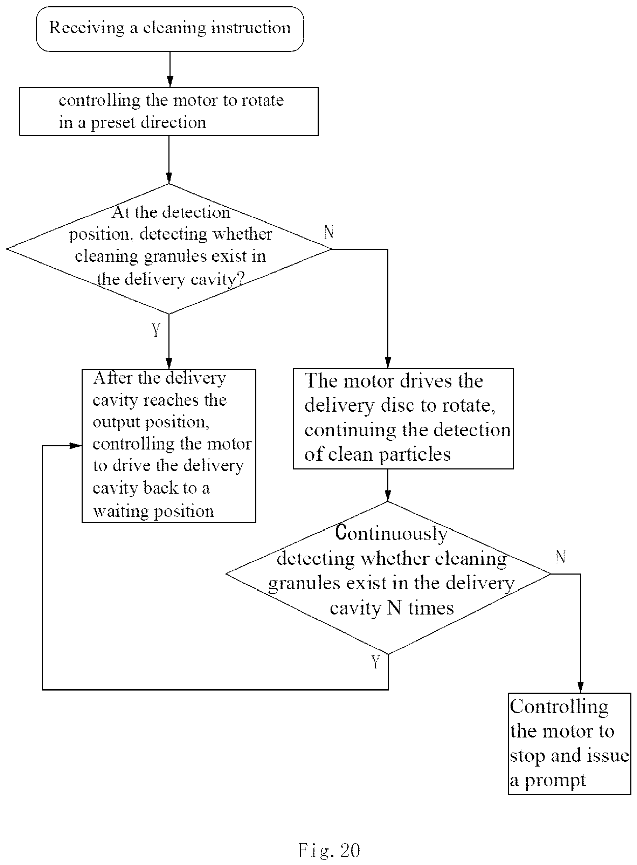

Referring to Fig. 20, the present application also provides a dispensing method applied to the cleaning granule dispensing device of the previous embodiments, including the following steps:
Receiving a cleaning instruction;
Controlling the motor 41 to rotate in a preset direction, driving the delivery cavity 422 of the delivery disc 42 to sequentially pass through a receiving position, a detection position, and an output position; where the receiving position indicates the delivery cavity 422 can receive cleaning granules, and the output position indicates it can dispense cleaning granules;
At the detection position, detecting whether cleaning granules exist in the delivery cavity 422;
When cleaning granules are detected, after the delivery cavity 422 reaches the output position, controlling the motor 41 to drive the delivery cavity 422 back to the waiting position.

The cleaning instruction can be a signal when the beverage machine needs cleaning, such as an automatic cleaning instruction from the controller when continuous dispensing beverage reaches a preset number, at preset time points, based on user trigger, at power-on or power-off, etc., meaning it can be based on user input or automatically generated by the controller.

The controller can be either the beverage machine's controller or the cleaning granule dispensing device's own controller, including general or special-purpose microprocessors for executing programming instructions or microcontrol code associated with the cleaning granule dispensing device's operation. Optionally, the controller can also be built to execute control functions without using a microprocessor, rather than relying on software. The controller can communicate with and control various components of the cleaning granule dispensing device, such as controlling the motor, detection elements, etc. based on commands from the controller.

When cleaning granules exist in the delivery cavity 422, the cleaning granule dispensing device can detect the presence of the cleaning granule, then the delivery cavity 422 passes through the output position before returning to the waiting position. At the output position, the cleaning granules in the delivery cavity 422 are dispensed into the target cleaning chamber 12. The waiting position can be spaced apart from the receiving, detection, and output positions for convenient control.

In this embodiment, only one delivery cavity 422 is provided, with the waiting position, the receiving position, the detection position, and the output position spaced 90 degrees apart circumferentially around the delivery disc 42, resulting in a simpler structure. Additionally, the waiting position can be the same as the receiving position. Detecting whether cleaning granules exist in the delivery cavity 422 after the receiving position and before the output position allows for appropriate control based on granule presence. For example, this can prevent subsequent cleaning operations when the target cleaning chamber hasn't received cleaning granules.

Optionally, detecting whether cleaning granules exist in the delivery cavity 422 at the detection position includes: receiving a first arrival signal from the second detection element 52 indicating the delivery cavity 422 is at the detection position; based on the first arrival signal, controlling the first detection element 51 to detect whether cleaning granules exist in the delivery cavity 422.

Triggering the first detection element 51 when the delivery cavity 422 reaches the detection position improves detection accuracy, extends service life of the first detection element 51, and saves energy.

In this embodiment, the first arrival signal can be the signal sent when the second detection element 52 detects the sensing portion 425. When the second detection element 52 is configured as a micro switch, the first arrival signal can be either the trigger signal or disconnection signal from the sensing portion 425. Of course, the first arrival signal can also be signals from counters, timers, etc.

Along the movement direction of the delivery cavity 422, the waiting position is located after the output position and before the receiving position. The method also includes: receiving a second arrival signal from the third detection element 53 indicating the delivery cavity 422 is at the waiting position; based on the second arrival signal, controlling the motor 41 to stop.

The signal indicating the delivery cavity 422 is at the waiting position can be from the third detection element 53 detecting the sensing portion 425, or can be based on preset time or rotation angle after receiving signal of the detection position. Controlling motor 41 to stop based on signal of the waiting position makes the entire cleaning granule delivery process more reliable and energy-efficient.

When the third detection element 53 is configured as a micro switch, the second arrival signal can also be either the trigger or disconnection signal from the sensing portion 425. The second arrival signal can also be signals from counters, timers, etc.

When no cleaning granules are detected, control the motor 41 driving the delivery disc 42 to rotate until granules are detected in the delivery cavity 422, preventing situations where granules exist in the storage container 30 but aren't successfully delivered. If no granules are detected for N consecutive times (where N is an integer greater than or equal to 3), the motor 41 stops and issues a prompt.

With one delivery cavity 422 provided, N consecutive non-detections means N rotations of the delivery disc 42 without detecting granules; with multiple delivery cavities 422, it may mean N consecutive cavities without granules. The prompt can be an alarm sound, flashing light, display screen message to add cleaning granules, etc.

It should be understood that although this specification describes embodiments separately, not every embodiment contains only one independent technical solution. This narrative style is merely for clarity. Technical personnel in the field should consider the specification as a whole, and technical solutions from different embodiments can be appropriately combined to form other embodiments understandable to those skilled in the field.

The series of detailed descriptions listed above are merely specific explanations of feasible implementations of the present application. They are not intended to limit the scope of protection of the present application. Any equivalent implementations or modifications made without departing from the technical spirit of the present application should be included within its scope of protection.

## Claims

1. A cleaning granule dispensing device (100), comprising:
a base (20);
a storage container (30) disposed above the base (20), the storage container (30) having an accommodation cavity (31) for accommodating cleaning granules;
a driving mechanism comprising a motor (41) and a delivery disc (42) driven to rotate by the motor (41), the delivery disc (42) being disposed on the base (20);
**characterized in that**, the storage container (30) comprises a bottom plate portion (32), the bottom plate portion (32) is provided with a discharge port (321) communicating with the accommodation cavity (31), the discharge port (321) is offset relative to a rotation axis of the delivery disc (42); the base (20) is provided with a delivery outlet (201); the delivery disc (42) is provided with at least one delivery cavity (422), driven by the motor (41), the delivery disc (42) drives the delivery cavity (422) to sequentially communicate with the discharge port (321) and the delivery outlet (201).

2. The cleaning granule dispensing device (100) according to claim 1, wherein the motor (41) is disposed on the base (20), an axis of the motor (41) is perpendicular to the rotation axis of the delivery disc (42), a peripheral surface of the delivery disc (42) is provided with drive teeth (421), the motor (41) drives the delivery disc (42) to rotate through the drive teeth (421).

3. The cleaning granule dispensing device (100) according to claim 1, wherein a stirring rod (43) is provided in the accommodation cavity (31), the stirring rod (43) is connected to the delivery disc (42), the delivery disc (42) is configured to drive the stirring rod (43) to rotate synchronously.

4. The cleaning granule dispensing device (100) according to claim 3, wherein the stirring rod (43) is configured to satisfy at least one of the following features:
the cleaning granules are spherical granules, the stirring rod (43) is coaxially disposed with the delivery disc (42), an outer contour of a cross section of the stirring rod (43) is constructed as a polygon, a difference between radii of the circumscribed circle and the inscribed circle of the polygon is less than the radius of the cleaning granules;
a stirring arm (44) is connected to the stirring rod (43), the stirring arm (44) extends at an angle relative to a longitudinal direction of the stirring rod (43); the stirring arm (44) includes a fixed end (441) and a suspended end (442) disposed opposite to each other, the fixed end (441) is fixedly connected to the stirring rod (43), the suspended end (442) is constructed as a free end;
the stirring arm (44) is configured to rotate with the stirring rod (43), the suspended end (442) is capable of deforming relative to the fixed end (441) when subjected to force.

5. The cleaning granule dispensing device (100) according to claim 1, wherein a storage channel (322) extending toward the delivery disc (42) is provided at the discharge port (321), the storage channel (322) is configured to communicate the accommodation cavity (31) with the delivery cavity (422); the storage channel (322) has a storage space, along a direction in which the cleaning granules enter the storage channel (322), the storage space is configured to accommodate at least one cleaning granule.

6. The cleaning granule dispensing device (100) according to any one of claims 1 to 5, wherein the bottom plate portion (32) comprises a supporting surface (352) for supporting the cleaning granules, the supporting surface (352) is configured as a spiral surface, the spiral surface has a spiral center line coinciding with a center line of the discharge port (321); the spiral surface satisfies at least one of the following features:
along a radial direction of the spiral center line, the spiral surface is inclined downward toward the center of the discharge port (321);
along an axial direction of the spiral center line, a height difference between a highest point and a lowest point of the spiral surface is less than or equal to one pitch.

7. The cleaning granule dispensing device (100) according to any one of claims 1 to 5, wherein the cleaning granule dispensing device (100) further comprises a first detection element (51) provided on the base (20), the first detection element (51) is configured to detect the cleaning granules in the delivery cavity (422); along a movement direction of the delivery cavity (422), the delivery cavity (422) sequentially has a receiving position, a detection position and an output position, at the receiving position, the delivery cavity (422) communicates with the discharge port (321), the delivery disc (42) is in a state of receiving the cleaning granules; at the detection position, the first detection element (51) is triggered; at the output position, the delivery cavity (422) communicates with the delivery outlet (201), the delivery disc (42) is in a state of dispensing the cleaning granules.

8. The cleaning granule dispensing device (100) according to any one of claims 1 to 5, wherein along a movement direction of the delivery cavity (422), the delivery cavity (422) sequentially has a waiting position, a receiving position and an output position, at the waiting position, the delivery cavity (422) is offset from both the discharge port (321) and the delivery outlet (201); at the receiving position, the delivery cavity (422) communicates with the discharge port (321), the delivery disc (42) is in a state of receiving the cleaning granules; at the output position, the delivery cavity (422) communicates with the delivery outlet (201), the delivery disc (42) is in a state of dispensing the cleaning granules.

9. The cleaning granule dispensing device (100) according to claim 7, wherein the cleaning granule dispensing device further comprises a second detection element (52), the second detection element (52) is provided on the base (20), a sensing portion (425) corresponding to the delivery cavity (422) is provided on the delivery disc (42), the second detection element (52) is configured to detect the sensing portion (425), when the second detection element (52) detects the sensing portion (425), the cleaning granule dispensing device (100) determines that the delivery cavity (422) is at the detection position;
and/or wherein the delivery cavity (422) further has a waiting position, along the movement direction of the delivery cavity (422), the waiting position is located after the output position and before the receiving position; the cleaning granule dispensing device (100) further comprises a third detection element (53), the third detection element (53) is provided on the base (20), a sensing portion (425) corresponding to the delivery cavity (422) is provided on the delivery disc (42), the third detection element (53) is configured to detect the sensing portion (425), when the third detection element (53) detects the sensing portion (425), the cleaning granule dispensing device (100) determines that the delivery cavity (422) is at the waiting position.

10. The cleaning granule dispensing device (100) according to any one of claims 1 to 5, wherein the delivery disc (42) is connected with the bottom plate portion (32) in a drivable manner, rotation of the delivery disc (42) is transmitted to the bottom plate portion (32) via the driving connection, causing the bottom plate portion (32) to move within a preset range along a radial direction of the delivery disc (42);
preferably, wherein the bottom plate portion (32) comprises a bottom plate (324) of the storage container (30) and a support member (325) disposed above the bottom plate (324); a drive shaft (423) is fixed on the delivery disc (42), the drive shaft (423) extends through the bottom plate (324) and is connected with the support member (325) in a drivable manner; a preset gap exists between the support member (325) and a side wall of the storage container (30), the preset gap allows the support member (325) to move relative to the bottom plate (324) along the radial direction of the delivery disc (42).

11. The cleaning granule dispensing device (100) according to any one of claims 1 to 5, wherein the delivery disc (42) is configured to satisfy at least one of the following features:
a first elastic member (46) is provided between the delivery disc (42) and the base (20), the first elastic member (46) provides an elastic force to the delivery disc (42) in a direction away from the base (20) along the rotation axis of the delivery disc (42) ;
a drive shaft (423) is fixed on the delivery disc (42), the drive shaft (423) extends through the bottom plate portion (32), the drive shaft (423) is clearance-fitted to the bottom plate portion (32), a rotational gap exists between the drive shaft (423) and the bottom plate portion (32); a powder guiding portion (427) protrudes from an end surface of the delivery disc (42) facing the bottom plate portion (32), the powder guiding portion (427) is attached to and surrounds an outer peripheral surface of the drive shaft (423), along an axial direction of the drive shaft (423), the powder guiding portion (427) corresponds to a position of the rotational gap; the powder guiding portion (427) comprises one or more powder guiding inclined surfaces (428), a protruding height of the powder guiding inclined surface (428) increases along a rotation direction of the drive shaft (423);
a powder blocking rib (429) is provided around an edge of the delivery disc (42), the powder blocking rib (429) protrudes toward the bottom plate portion (32), the powder blocking rib (429) is disposed on the periphery of the delivery cavity (422);
the base (20) is further provided with a powder leakage port (204) spaced apart from the delivery outlet (201), during rotation of the delivery disc (42), the delivery cavity (422) is configured to communicate with the powder leakage port (204).

12. The cleaning granule dispensing device (100) according to any one of claims 1 to 5, further comprising a sealing cover (48) circumferentially fixed relative to the delivery disc (42), the sealing cover (48) is disposed between the delivery disc (42) and the base (20), the sealing cover (48) is provided with a through hole (482) communicating with the delivery cavity (422), the delivery cavity (422) communicates with the delivery outlet (201) through the through hole (482), the sealing cover (48) is configured to satisfy at least one of the following features:
a positioning post (202) is provided on the base (20), the delivery disc (42) is provided with a positioning hole (420) extending along the rotation axis of the delivery disc (42) direction, the positioning post (202) extends through the sealing cover (48) and into the positioning hole (420), an insertion foot (4201) is provided at the edge of the positioning hole (420); the sealing cover (48) is further provided with a blocking edge (485) disposed at the periphery of the positioning post (202), a slot (4801) is formed between the blocking edge (485) and the positioning post (202), the insertion foot (4201) is inserted into the slot (4801) to restrict rotation of the sealing cover (48) relative to the delivery disc (42);
a recess (424) is provided on a side of the delivery disc (42) facing the base (20), the sealing cover (48) covers an opening of the recess (424), a second elastic member (483) is provided in the recess (424), the second elastic member (483) provides an elastic force to the sealing cover (48) in a direction away from the delivery disc (42) along the rotation axis of the delivery disc (42) ;
a recess (424) is provided on a side of the delivery disc (42) facing the base (20), the sealing cover (48) covers an opening of the recess (424), a skirt edge (484) surrounding the rotation axis is provided at an end of the sealing cover (48) facing the delivery disc (42), the skirt edge (484) extends into the recess (424);
the base (20) is further provided with a powder leakage port (204) spaced apart from the delivery outlet (201), an annular protrusion (203) surrounding the rotation axis is provided on the base (20), both the delivery outlet (201) and the powder leakage port (204) are located inside the annular protrusion (203), the sealing cover (48) abuts against the annular protrusion (203).

13. A beverage machine, comprising a main body (10), a target cleaning chamber (12) is provided inside the main body (10), **characterized in that**, the main body (10) is provided with the cleaning granule dispensing device (100) according to any one of claims 1 to 12, the cleaning granule dispensing device (100) is configured to dispense cleaning granules to the target cleaning chamber (12).

14. A dispensing method, applied to the cleaning granule dispensing device (100) according to any one of claims 1 to 12, **characterized in that**, comprising:
receiving a cleaning instruction;
controlling the motor (41) to rotate in a preset direction, the motor (41) drives the delivery cavity (422) of the delivery disc (42) to sequentially pass through a receiving position, a detection position and an output position; the receiving position indicates that the delivery cavity (422) is configured to receive cleaning granules; the output position indicates that the delivery cavity (422) is configured to dispense the cleaning granules;
at the detection position, detecting whether cleaning granules exist in the delivery cavity (422);
when the cleaning granules are detected, after the delivery cavity (422) reaches the output position, controlling the motor (41) to drive the delivery cavity (422) back to a waiting position.

15. The dispensing method according to claim 14, wherein detecting whether cleaning granules exist in the delivery cavity (422) at the detection position comprises:
receiving a first arrival signal sent by a second detection element (52), the first arrival signal indicating that the delivery cavity (422) is at the detection position;
based on the first arrival signal, controlling a first detection element (51) to detect whether cleaning granules exist in the delivery cavity (422);
and/or wherein along a movement direction of the delivery cavity (422), the waiting position is located after the output position and before the receiving position, the dispensing method further comprises:
receiving a second arrival signal sent by a third detection element (53), the second arrival signal indicating that the delivery cavity (422) is at the waiting position;
based on the second arrival signal, controlling the motor (41) to stop;
and/or wherein when no cleaning granules are detected, controlling the motor (41) to drive the delivery disc (42) to rotate until cleaning granules are detected in the delivery cavity (422) at the detection position; if cleaning granules are not detected for N consecutive times at the detection position, controlling the motor (41) to stop and sending a prompt, wherein N is an integer greater than or equal to 3.
